# EUROPEAN PATENT APPLICATION

(11) **EP 1 258 578 A2**
(43) Date of publication of application: **20.11.2002**
(21) Application number: 02253507.4
(22) Date of filing: 17.05.2002
(51) Int. Cl.: E04F 11/18, F16B 7/18

(54) **Tube connector**

(30) Priority: 19.05.2001 GB 0112292
(71) Applicant: Kee Klamp Limited, Worton Grange, Reading RG2 OTQ (GB)
(72) Inventor: Greaves, John, Lockerley, Hampshire SO51 0JT (GB)
(74) Representative: Badger, John Raymond

(57) **Abstract**

A tube connector (15,16) for securing to an end of an internally splined tube (11,12) for enabling said tube to be secured to another member, and suitable for joining tubes of a handrail or balustrade, comprises an outer location section (20) comprising a radially outwardly facing surface provided with splined formations to engage with splined formations (13,14) within an internally splined tube (11,12), a retention bush formation (21) provided at a position substantially aligned with the major axis of said radially outwardly facing surface, said bush formation comprising an aperture (24) for location of connection means (27), and a radially extending intermediate (23) section which extends between and is integral with said retention bush formation (21) and outer location section (20), whereby said retention bush formation (21) is fixedly positioned radially relative to said outer location section (20). A method of forming the assembly is also disclosed.

## Description

This invention relates to a tube connector for use in structurally interconnecting a tube with another member, an assembly of a tube and member interconnected by said tube connector and a method of interconnecting a tube with another member. It relates in particular, though not exclusively, to a structural interconnection incorporating at least one curved tube, such as may be utilised in a handrail or balustrade assembly.

Tube connectors for forming a structural interconnection between tubes are well known and connectors of a type which provide a continuous flush surface between two tubes are used commonly in the construction of handrails and balustrades. Whilst known connector devices can provide a satisfactory interconnection, they often are inconvenient in use during assembly, expensive to manufacture, or are not well adapted to ensure that interconnected tubes are firmly held in radial alignment thereby to provide a smooth, substantially continuous outer surface at the interconnection of two similar tube ends.

The present invention seeks to provide a tube connector, an assembly incorporating a tube connector and a method of forming a structural interconnection with a tube in which at least some of the aforedescribed disadvantages are mitigated or overcome.

In accordance with one of its aspects the present invention provides a tube connector for securing to an end of an internally splined tube for enabling said tube to be secured to another member, said tube connector comprising: -
an outer location section comprising a radially outwardly facing surface provided with splined formations to engage with splined formations within an internally splined tube;
a retention bush formation provided at a position substantially aligned with the major axis of said radially outwardly facing surface, said bush formation comprising an aperture for location of connection means, and
a radially extending intermediate section which extends between and is integral with said retention bush formation and outer location section whereby said retention bush formation is fixedly positioned radially relative to said outer location section.

The invention envisages that the outer location section preferably is substantially in the form of a sleeve.

Preferably the axial length of the sleeve is at least 25%, more preferably at least 50% of the maximum radial dimension of said radially outwardly facing surface of the location sleeve.

Said intermediate section may be of web-like form, e.g. substantially in the form of a diaphragm. An end of the sleeve, end of the retention bush and said intermediate section may define a substantially planar face. Alternatively, said end face may depart from a planar form and may, for example, be of a dished or a frusto-conical shape such that the end of the retention bush lies slightly inset longitudinally relative to the end of the location sleeve, for a purpose described below.

The retention bush preferably comprises a through-bore adapted to receive and accurately locate in a radial direction connection means such as the stem section of a bolt.

The retention bush may comprise positioning means for holding a connection means or part thereof, e.g. a nut or the head of a bolt, to prevent axial displacement of connection means at least during assembly operations and /or to prevent connection means such as a nut or head of a bolt, from rotating relative to the tube connector during an assembly operation to form an interconnection between two tubes.

Said radially outwardly facing splined surface may be of a generally cylindrical form. However in the case of a tube connector for joining of a tube which is curved along its length, said radially outwardly facing splined surface preferably is curved along its length to have a curvature corresponding to that of the internally splined surface of the tube end.

Preferably the retention bush is located wholly within the axial length of the outwardly facing splined surface, e.g. that of a location sleeve.

Suitable materials for the tube connector include materials such as aluminium, aluminium alloy, mild steel and other materials including plastics. Preferably the material is one which allows the outer sleeve to be drilled and tapped to receive a fixing screw that extends in a radially inward direction through a hole formed in the end of a tube.

The outer location section may be pre-drilled and tapped at one or a plurality of circumferentially spaced positions prior to being inserted into the end of the tube; jig means optionally may be employed to form a hole in the end of an internally splined tube at a position correctly aligned with a pre-drilled hole in the outer location section.

The invention provides also a method of constructing a structural interconnection between two internally splined tubes comprising fitting into the end of each tube a tube connector or a kind in accordance with the present invention, with connection means extending through aligned apertures of the respective retention bush formations of the two tube connectors and with each tube connector secured longitudinally relative to a tube end by fixing means extending through a tube wall into engagement with a respective outer location section, and said method comprising tightening the connection means so as to secure the two tube connectors axially relative to one another and thereby prevent separation of the tube ends.

The connection means may be tightened by the action of rotating a tool which extends lengthwise through one of the tubes and engages with a part of the connection means.

Alternatively the connection means may be tightened by rotating the two internally splined tubes relative to one another. In that case the connection means may comprise a nut and bolt and each of the nut and bolt may be held captive against rotation in a respective retention bush formation so that relative rotation of the tubes results in relative rotation to tighten the nut and bolt.

Preferably the method comprises employing the connection means to at least loosely interconnect the two tube connectors prior to insertion of either or both of the tube connectors into a respective tube end. Alternatively a tube connector may be fitted to and secured in the end of each respective tube end prior to connection means, or a part thereof, being positioned to extend through an or each retention bush formation.

To complete assembly the connection means preferably is tightened fully subsequent to each of the tube connectors having been secured axially relative to a tube end. In the case of one or each of the tube connectors having a dished or frusto-conical end face profile for confronting the other tube connector, the connection means may be tightened to deform the end faces each to be substantially planar and in direct contact with one another, or to only partly deform said non-planar end faces but nevertheless sufficiently pre-load the connector devises such that the interconnected tubes are held firmly in contact with one another at their ends.

The connection means, such as a bolt and nut, preferably is of a kind which co-operates with the apertures of the retention bushes to ensure that the two tube connectors are accurately aligned radially relative to one another. Accurate radial alignment of the outer surfaces of the tube ends and attainment of a smooth substantially continuous outer surface of the resulting tube assembly is thereby achieved. In the case of connection means comprising a nut and bolt, preferably the stem portion of the bolt is a close sliding fit in the respective apertures.

Whilst it is envisaged that the two tube connectors of a pair used to interconnect two tube ends shall each be of an identical construction, the invention envisages that the respective end faces of two connectors of a pair may be profiled e.g. with male and female formations whereby in the resulting assembly said formations co-operate to ensure radial alignment of the faces. Thus one end face may comprise a circumferentially extending groove and the other may comprise a circumferentially extending rib locatable in said groove when in a final assembly.

The invention further provides a hand rail or balustrade installation comprising an interconnection between a tube and another member, typically between two tubes, which incorporates at least one tube connector of the invention or is formed by the method of the invention.

One embodiment of the present invention will now be described, by way of example only, with reference to the accompanying diagrammatic drawings in which: -
Figure 1 is an exploded perspective view of two tubular elbows interconnected by tube connectors of the present invention;
Figure 2 is a longitudinal sectional view of the assembly of Figure 1;

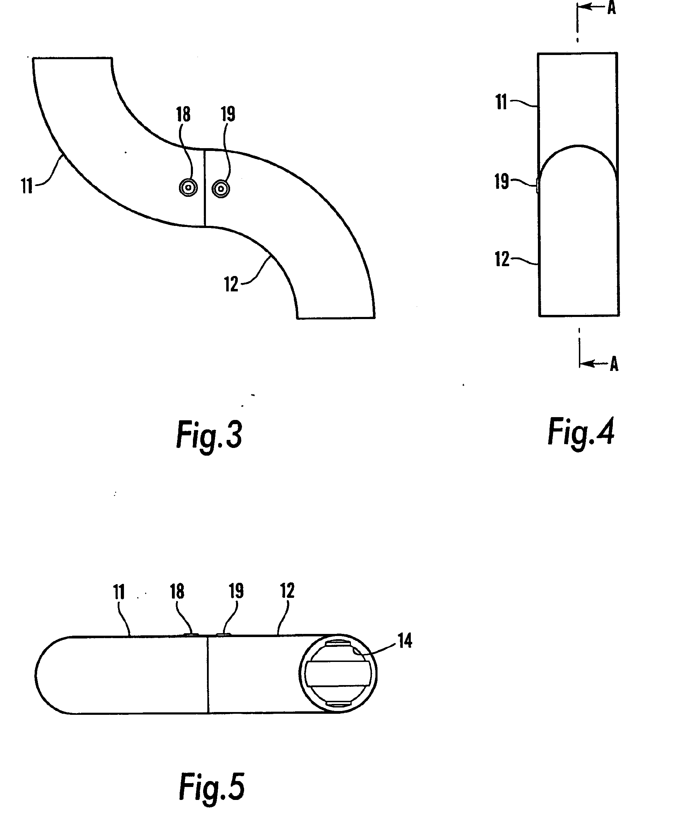

Figure 3 is a side view of the assembly shown in Figure 2, and
Figures 4 and 5 are respectively end and underside views of the assembly as shown in Figure 2.

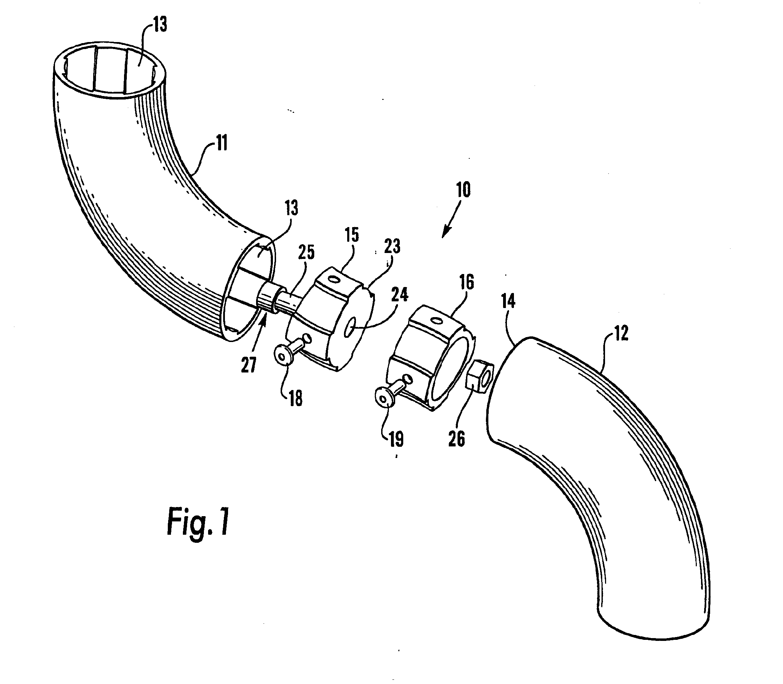

Figure 1 shows a tube assembly (10) comprising two right angle elbow tubes (11, 12) each having internally splined surfaces (13, 14), two internal tube connectors (15, 16), a connection nut (26) and bolt (27), and countersunk fixing screws (18, 19).

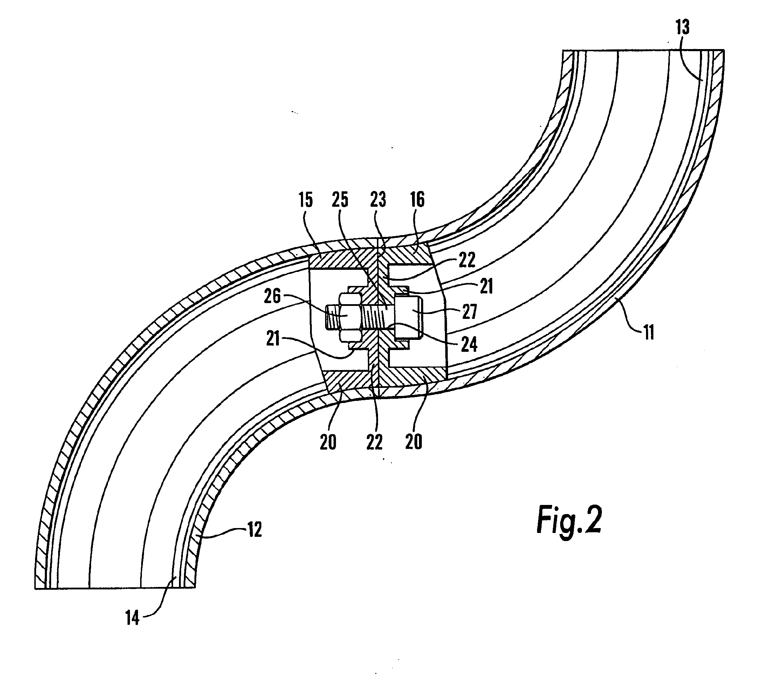

Each tube connector (15, 16) ( see Figure 2 )comprises a radially outer location sleeve (20), a central retention bush (21) and, extending radially therebetween, an intermediate web portion (22). A surface of the web portion (22) and an end of each of the location sleeve (20) and retention bush (21) define a substantially planar end face (23). The retention bush defines a through-bore aperture (24) aligned substantially with the longitudinal, major axis of the location sleeve (20).

The radially outer surface of the location sleeve is curved lengthwise to conform to the curvature of each tubular elbow (11, 12), and is externally splined to be a close fit within a tube end in a configuration in which the splined surfaces are in engagement with one another.

The connection means in the form of the nut and bolt (26, 27) comprises a nut (26) which is a tight fit within an end recess of the retention bush of one of the tube connectors and a bolt head which is freely rotatable within the retention bush recess of the other tube connector. The bolt has a stem portion (25) which is a close fit within the aligned apertures such that the bolt thereby ensures that the two tube connectors are maintained radially aligned relative to one another.

In the illustrated embodiment the location sleeve (20) has an axial length which averages at approximately 75% of the radial dimension of the tube connector end face.

To form the assembly as shown in Figure 2, the nut and bolt (26, 27) are employed to substantially loosely interconnect the two tube connectors. The pair of tube connectors are then arranged in the respective ends of the two tubes (11, 12), fixing screws (18, 19) are inserted through (optionally pre-formed) holes in the tube walls to extend into and engage with screw threads (optionally pre-formed) in the location sleeves. A long length allen key is then inserted through the bore of one (11) of the tube sections to tighten the bolt (27) in the nut (26), rotation of the nut (26) being resisted by engagement thereof with the complimentarily shaped non-circular recess of the retention bush.

Whilst the invention has been described in respect of a tube connector comprising a web or diaphragm like section (22) between the retention bush and location sleeve, it is to be understood that the intermediate section may be axially extensive. For example it may extend axially for a distance corresponding to that of the retention bush, or greater.

In an alternative embodiment, not illustrated, the head of the bolt (27) is held captive in a retention bush (21) so that it rotates in unison with the associated tube connector (16). The nut and bolt can then be tightened by relative rotation of the tubes (13, 14).

## Claims

1. A tube connector for securing to an end of an internally splined tube for enabling said tube to be secured to another member, **characterised in that** said tube connector (15,16) comprises: -
an outer location section (20) comprising a radially outwardly facing surface provided with splined formations (13,14) to engage with splined formations within an internally splined tube (11,12);
a retention bush formation (21) provided at a position substantially aligned with the major axis of said radially outwardly facing surface, said bush formation (21) comprising an aperture (24) for location of connection means (27), and
a radially extending intermediate section (22) which extends between and is integral with said retention bush formation (21) and outer location section (20) whereby said retention bush formation is fixedly positioned radially relative to said outer location section.

2. A tube connector according to claim 1, **characterised in that** the outer location section is substantially in the form of a sleeve.

3. A tube connector according to claim 2, **characterised in that** the axial length of the sleeve (20) is at least 25% of the maximum radial dimension of said radially outwardly facing surface of the location sleeve, and said intermediate section (22) is of web-like form.

4. A tube connector according to any one of the preceding claims, **characterised in that** an end of the sleeve (22), end of the retention bush (21) and said intermediate section (22) define a substantially planar face (23).

5. A tube connector according to any one of the claims 1 to 3, **characterised in that** an end of the sleeve (20), end of the retention bush (21) and said intermediate section (22) define an end face (23), and said end face departs from a planar form such that the end of the retention bush lies slightly inset longitudinally relative to the end of the location sleeve.

6. A tube connector according to any one of the preceding claims, **characterised in that** the retention bush (21) comprises a through-bore (24) adapted to receive and accurately locate connection means (26,27) in a radial direction.

7. A tube connector according to any one of the preceding claims, **characterised in that** the retention bush (21) comprises positioning means, such as a recess, for holding a connection means (26,27) or part thereof to prevent the connection means rotating relative to the tube connector during an assembly operation to form an interconnection between two tubes.

8. A tube connector according to any one of the preceding claims, **characterised in that** the tube connector (15,16) is adapted for joining of a tube which is curved along its length, said radially outwardly facing splined surface being curved along its length to have a curvature corresponding to that of the internally splined surface of the tube end.

9. A tube connector according to any one of the preceding claims, **characterised in that** the retention bush (21) is located wholly within the axial length of the outwardly facing splined surface of the location section (20).

10. A method of constructing a structural interconnection between two internally splined tubes **characterised in that** it comprises fitting into the end of each tube (11,12) a tube connector (15,16) of a kind in accordance with any one of the preceding claims, with connection means (27) extending through aligned apertures of the respective retention bush formations of the two tube connectors and with each tube connector secured longitudinally relative to a tube end by fixing means (18,19) extending through a tube wall into engagement with a respective outer location section (20), and said method comprising tightening the connection means (26,27) so as to secure the two tube connectors axially relative to one another and thereby prevent separation of the tube ends.
